(19) Europäisches Patentamt
European Patent Office
Office européen des brevets

(11) **EP 0 865 174 A2**

(12) **EUROPÄISCHE PATENTANMELDUNG**

(43) Veröffentlichungstag:
16.09.1998 Patentblatt 1998/38

(51) Int. Cl.⁶: **H04B 10/24**

(21) Anmeldenummer: 97118412.2

(22) Anmeldetag: 23.10.1997

(84) Benannte Vertragsstaaten:
**AT BE CH DE DK ES FI FR GB GR IE IT LI LU MC NL PT SE**
Benannte Erstreckungsstaaten:
**AL LT LV RO SI**

(30) Priorität: **14.03.1997 DE 19710571**

(71) Anmelder:
**Gebrüder Merten GmbH & Co. KG
D-51674 Wiehl (DE)**

(72) Erfinder: **Wassilij, Herbrandt
51674 Wiehl (DE)**

(74) Vertreter:
**Selting, Günther, Dipl.-Ing. et al
Patentanwälte
von Kreisler, Selting, Werner
Postfach 10 22 41
50462 Köln (DE)**

(54) **Bidirektonales elektrooptisches Datenübertragungssystem**

(57)  Die Erfindung bezieht sich auf ein Datenübertragungssystem mit elektro-optischen Sende- und Empfangseinrichtungen zum Senden und Empfangen von Binärsignalen zwischen zwei Stationen im (Voll-) Duplex-Betrieb über nur einen Lichtwellenleiter mit kombinierten Sende- und Empfangselementen. Die Aufgabe der Erfindung besteht darin, die Sende- und Empfangseinrichtung derart auszubilden, daß eine einfache und störungssichere Signalübertragung auch ohne besondere Entkopplungsmaßnahmen der jeweiligen Sende- und Empfangselemente möglich ist. Die Lösung der Aufgabe besteht darin, daß jedes 0-Bit der Sende- und Empfangssignale als Pulse ausgebildet sind, und die Sendepulse der einen Station eine andere Pulsfolgefrequenz besitzen als die Sende-Pulse der anderen Station. Die Empfangselemente empfangen Summen-Pulse, die sich aus Streulicht-Sende-Pulsen und Empfangs-Pulsen zusammensetzen. Die Summen-Pulse werden einem Eingang einer Austastschaltung zugeführt, die über einen zweiten Eingang synchron mit den Sende-Pulsen laufende Austast-Pulse erhält, mit denen die durch die Empfangselemente eingekoppelten Streulicht-Sende-Pulse aus den Summen-Pulsen ausgetastet werden.

FIG.1

Printed by Xerox (UK) Business Services
2.16.3/3.4

**Beschreibung**

Die Erfindung bezieht sich auf ein Datenübertragungssystem mit mindestens zwei elektro-optischen Sende- und Empfangseinrichtungen zum Senden und Empfangen von Binärsignalen zwischen wenigstens zwei Stationen im Duplex-Betrieb über einen Lichtwellenleiter mit räumlich eng benachbarten Sendeelementen und Empfangselementen in jeder Station.

Durch die EP 0 645 653 A2 ist eine elektro-optische Sende- und Empfangseinrichtung für Lichtwellenleiter bekannt, die Sende- und Empfangssignale über nur einen Lichtwellenleiter in beide Richtungen übertragen kann. Hierfür sind ein Sende- und ein Empfangselement derart eng benachbart angeordnet, daß sie Zugriff auf die gleiche Lichtwellenleiter-Schnittstelle haben. Allerdings kann mit dieser Sende- und Empfangseinrichtung keine permanente Vorwärts- und Rückwärtsverbindung hergestellt werden.

Durch die EP 0 193 190 ist ein optisches Nachrichtenübertragungssystem zur doppeltgerichteten Übertragung von teilnehmerindividuellen Nachrichten zwischen einer Zentrale und mehreren Teilnehmern beschrieben. Die Übertragung erfolgt in beide Richtungen über einen einzigen Lichtwellenleiter. Hierbei werden von der Zentrale zu einer Gruppe von Teilnehmern zu übertragende Signale zu einem Zeitmultiplexsignal zusammengefaßt. Die von der Gruppe von Teilnehmern zur Zentrale laufende Signalübertragung erfolgt im Wellenlängenmultiplex.

In der DE 35 15 981 A1 ist ein Lichtwellenleiter-Übertragungssystem beschrieben, bei dem ein Lichtwellenleiter für beide Übertragungsrichtungen benutzt und eine hohe Ausnutzung der Übetragungskapazität eines Lichtwellenleiters durch einen Betrieb der Lichtleitfaser im bidirektionalen Wellenlängenmultiplex (WDM - Wavelength Division Multiplex) erreicht wird, indem für die Signalübertragung in der einen Übertragungsrichtung Lichtwellen mit einer niedrigeren Wellenlänge, etwa um 830 nm, und für die Signalübertragung in der anderen Übertragungsrichtung Lichtwellen mit einer höheren Wellenlänge, etwa um 1300 nm, verwendet werden.

Die Aufgabe der Erfindung besteht darin, eine elektro-optische Sende- und Empfangseinrichtung zu schaffen, mit der die Übertragung von Sende- und Empfangssignalen gleichzeitig in beide Richtungen über nur einen Lichwellenleiter erfolgen kann. Ferner soll auf eine optische Entkoppelung der Sende- und Empfangselemente verzichtet werden.

Die Aufgabe wird erfindungsgemäß durch die in Anspruch 1 aufgeführten Merkmale gelöst. Weiterbildungen der Erfindung sind in den Unteransprüchen beschrieben.

Die erfindungsgemäße Sende- und Empfangseinrichtung kann zur Herstellung einer optischen Datenverbindung von einem gebäudeseitig installierten elektrischen Bussystem zu einem Endgerät über eine flexible Leitung zum Schalten, Steuern, Regeln und Überwachen benutzt werden, wobei eine Signalübertragung von einem Busankoppler zum Endgerät über nur einen Lichtwellenleiter erfolgt.

Bei üblichen gebäudeseitigen Bussystemen werden Informationen zwischen einzelnen Busteilnehmern über Telegramme ausgetauscht. Mit den Busankopplern wird die datentechnische Kopplung zwischen der Busleitung und einem Endgerät hergestellt, wobei mit der elektro-optischen Sende- und Empfangseinrichtung eine Umwandlung der elektrischen Signale des Busankopplers in optische und die Umwandlung der elektrischen Signale vom Endgerät in optische Signale für den Busankoppler stattfinden kann. Hierfür sind ein Sender-Modulator und ein Empfänger-Demodulator vorgesehen. Ein entsprechender Busankoppler kann eine geräteseitige Anwendungs-Schnittstelle mit wenigstens einem Signaleingang und einem Signalausgang besitzen, wobei der Signalausgang mit einem Signaleingang des Sender-Modulators verbunden ist. Jedes Informationsbit des elektrischen Binärsignals kann mit dem Sender-Modulator in eine Impulsfolge (Impulspaket) codiert werden, die mit dem einen Sendeelement als optische Impulsfolge in den Lichtwellenleiter emittiert wird.

Umgekehrt kann jede vom Endgerät über den Lichtleiter kommende optische Impulsfolge mit einem Empfangselement in eine elektrische Impulsfolge umgewandelt werden. Die elektrische Impulsfolge des Empfängersignals wird mit dem Empfänger-Demodulator in ein Informationsbit zurückverwandelt. Ein derartiges Binärsignal kann über den Ausgang des Empfänger-Demodulators in einen geräteseitigen Eingang der Anwendungs-Schnittstelle des Busankopplers eingespeist, dort in ein Telegramm geformt und über den Bus an eine Zieladresse gesendet werden.

Die Erfindung geht von der Erkenntnis aus, daß es für bestimmte Anwendungen, beispielsweise solche für den Einbau in herkömmliche Steckdosen, günstiger ist, auf eine aufwendige optische Entkopplung zu verzichten, um das Sendeelement und das Empfangselement räumlich eng benachbart anordnen zu können, so daß durch ein Lichtfenster hindurch eine Kopplung mit einem steckerseitigen Lichtwellenleiter ermöglicht wird. Dabei wird in Kauf genommen, daß Streulicht des Sendeelementes in das Empfangselement eingekoppelt wird, auch wenn das Empfangselement gleichzeitig über den Lichtwellenleiter Lichtsignale empfängt.

Bei einer räumlich eng nebeneinanderliegenden Anordnung der Sende- und Empfangselemente, wie sie beispielsweise für den Einbau in herkömmliche Haushaltssteckdosen erforderlich ist, werden durch Lichtstreuung der Senderelemente bedingt, optische Sendersignale in die Empfangselemente eingekoppelt, so daß die Empfangselemente ein Summensignale empfangen, aus dem die eingestreuten Sendepulse auf der elektrischen Seite herausgefiltert werden.

Die Erfindung macht sich die Tatsache zunutze, daß die optisch in das Empfangselement eingekoppelten Streulicht-Pulse des elektro-optischen Sendeelementes am elektrischen Empfängerausgang nach wie vor synchron mit den Sende-Pulsen verlaufen und in ihrer Pulsfolgefrequenz den ursprünglichen elektrischen Sende-Pulsen am Eingang des Empfangselementes entsprechen. Damit können durch die Sende-Pulse getriggerte Austast-Pulse generiert und durch Addition (oder Subtraktion) mit den Summen-Pulsen die darin eingekoppelten Streu-Pulse ausgetastet werden. Hierfür ist an den elektrischen Eingang des Sendeelementes eine Austastsignalformerstufe angeschlossen, die mit ihrem Ausgang an einem Eingang einer Differenzstufe liegt. Der Ausgang des Empfangselementes ist mit dem zweiten Eingang der Differenzstufe verbunden. Der Ausgang der Differenzstufe ist an den Eingang des Empfänger-Demodulators angeschlossen. Durch die synchron von den Sendersignalen gesteuerte Austastschaltung gelangt somit ein positiver, vom Sende-Puls getriggerter und von dem Impulsformer erzeugter, Austast-Puls mit einer bestimmten Pulsfolgefrequenz in die Differenzstufe. Die Pulsfolgefrequenz des Austast-Pulses entspricht der Pulsfolgefrequenz des Sende-Pulses. Die Schrittdauer eines Impulses des Austast-Pulses ist größer als die Schrittdauer eines Impulses des Sende-Pulses.

Über den Empfangskanal des Empfangselementes gelangt das Summensignal in die Differenzstufe. Das Summensignal setzt sich zusammen aus dem Empfangs-Puls und dem Streu-Puls. Der Streu-Puls ist der durch Lichtstreuung des Sendeelementes in das Empfangselement optisch eingekoppelte Sende-Puls der synchron und phasengleich zum Sende-Puls verläuft, jedoch verzerrt erscheint. Es ist darauf zu achten, daß die Schrittdauer der Impulse des Austast-Pulses größer ist als die Schrittdauer der Impulse des Streu-Pulses. Die Sende-Pulse der Stationen haben verschiedene Pulsfolgefrequenzen.

Der Summen-Puls und der Austast-Puls des Impulsformers liegen in der Differenzstufe in zueinander invertierter Form vor, wobei der Austast-Puls des Impulsformers und der Streu-Puls synchron und phasengleich zueinander verlaufen. Mit der Differenzstufe erfolgt eine Verknüpfung der beiden Signale, indem der Streu-Puls durch den Austast-Puls des Impulsformers ausgetastet wird. Am Ausgang der Differenzstufe wird ein elektrisches Empfangssignal abgegeben, das dem optischen Empfangssignal entspricht. Je nach Pulsfolgefrequenz des Sende-Pulses und des Empfangs-Pulses kann eine Kollision einzelner Impulse erfolgen, so daß im Empfangs-Puls ein oder mehrere Impulse fehlen können. Da niemals Kollisionen von aufeinanderfolgenden Impulsen auftreten, geht keine Information verloren.

Die Empfangs-Pulse der Empfangssignale werden im Demodulator in Bits umgeformt.

Nachfolgend ist anhand der Zeichnungen ein Ausführungsbeispiel der Erfindung näher beschrieben.

Es zeigen:

Fig. 1    eine schematisch dargestellte Sende- und Empfangseinrichtung und

Fig. 2    eine graphische Darstellung zur Funktionsweise der Sende- und Empfangseinrichtung.

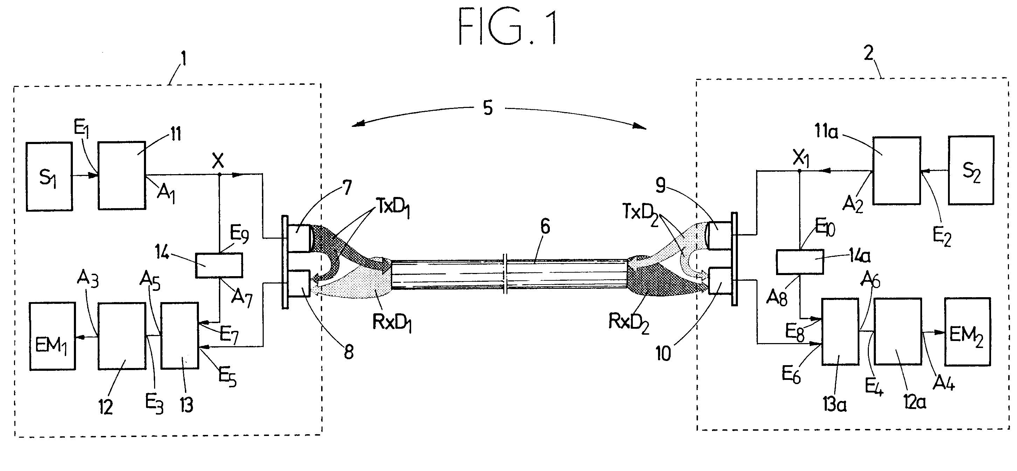

Die in Fig. 1 dargestellte Sende- und Empfangseinrichtung 5 besteht aus der Sende- und Empfangsstation 1 und der Sende- und Empfangsstation 2, die beide durch einen Lichtwellenleiter 6 miteinander verbunden sind. Die Sende- und Empfangseinrichtung 5 dient zum Senden und Empfangen von Binärsignalen $TxD_1$, $RxD_1$; $TxD_2$, $RxD_2$ zwischen den beiden Stationen 1, 2 über den einen Lichtwellenleiter 6 im (Voll-) Duplex-Betrieb.

Die elektro-optischen Sende- und Empfangselemente 7, 8; 9, 10 in Station 1 und 2 sind miteinander kombiniert und räumlich so eng nebeneinanderliegend angeordnet, daß optische Sendesignale $TxD_1$ und $TxD_2$ außer in den Lichtwellenleiter 6 auch in die benachbarten Empfangselemente 8, 10 als Streusendesignale eingekoppelt werden. Als Sendeelemente 7, 9 können Lumineszenzdioden und als Empfangselemente können Fotodioden verwendet werden. Über eine Luftstrecke oder einem optischen Adapter sind die Sende- und Empfangselemente 7, 8; 9, 10 optisch mit dem Lichtwellenleiter gekoppelt. Bei entsprechender Miniaturisierung der Sende- und Empfangselemente 7, 8; 9, 10 kann die Ankopplung auch über einen lichtleitenden Kleber erfolgen, wobei die Ankopplung jeweils mit der einen vorhandenen optisch wirksamen Querschnittsstirnfläche des Lichtwellenleiters 6 erfolgt.

Die Sende- und Empfangseinrichtung 5 enthält außer den Sende- und Empfangselementen 7, 8; 9, 10 noch einen Modulator 11, 11a, einen Demodulator 12, 12a, eine Austastschaltung 13, 13a und einen Impulsformer 14, 14a in jeder Station 1, 2.

Der Modulator 11, 11a ist mit seinem Eingang $E_1$, $E_2$ an den Sender $S_1$, $S_2$ angeschlossen und liegt mit seinem Ausgang $A_1$, $A_2$ am Sendeelement 7, 9.

Der Demodulator 12, 12a ist mit seinem Ausgang $A_2$, $A_4$ an den Empfänger $EM_1$, $EM_2$ angeschlossen. An den Eingang $E_3$, $E_4$ des Demodulators 12, 12a ist der Ausgang $A_5$, $A_6$ der Austastschaltung 13, 13a angeschlossen. Der eine Eingang $E_5$, $E_6$ der Austastschaltung 13, 13a ist an das Empfangselement 8, 10 angeschlossen. Der andere Eingang $E_7$, $E_8$ der Austastschaltung 13, 13a liegt am Ausgang $A_7$, $A_8$ des Impulsformers 14, 14a, der mit seinem Eingang $E_9$, $E_{10}$ am Ausgang $A_1$, $A_2$ des Modulators 11, 11a liegt. In Figur 1 erfolgt der Anschluß am Abzweig X, X1.

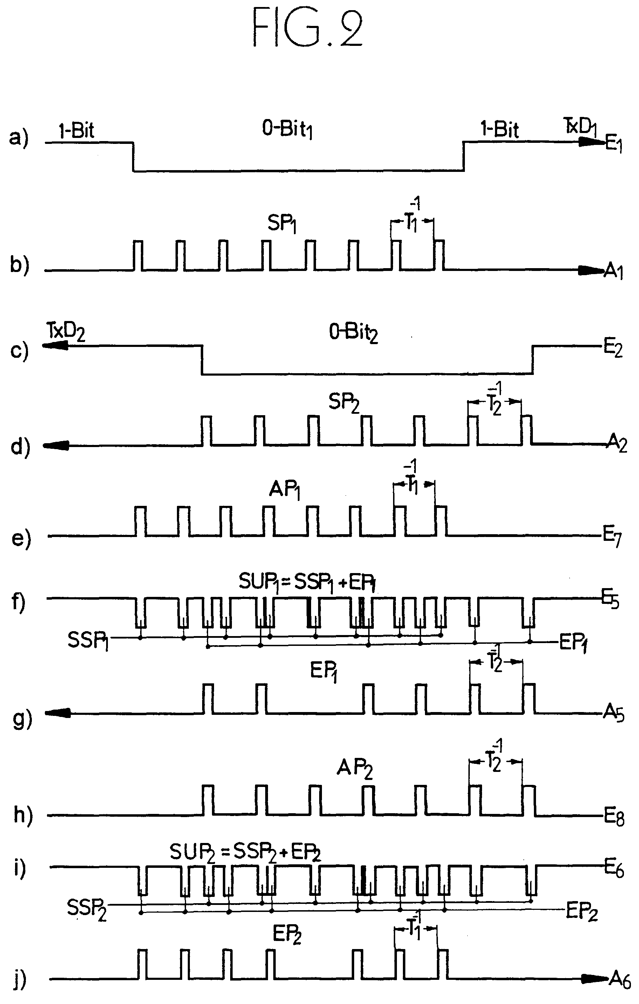

Die Figur 2 a zeigt ein Informations-$Bit_1$ des Binärsignals des Senders $S_1$. Der Modulator 11 zerlegt das Informations-$Bit_1$ in eine positive Impulsfolge $SP_1$ mit einer konstanten Pulsfolgefrequenz $T_1^{-1}$. Hierbei kann beispielsweise die Schrittdauer eines Impulses 0,5 µs und die Impulsfolgefrequenz $T_1^{-1}$ 8 µs betragen (für Übertragungsgeschwindigkeiten bis 19,2 kb).

Die Fig. 2 b zeigt ein solches Impulspaket mit der

Pulsfolgefrequenz $T_1^{-1}$, das zum Sendeelement 7 gelangt und in den Lichtwellenleiter 6 eingekoppelt wird.

Die Figur 2 c zeigt ein Informations als $O\text{-Bit}_2$ des Binärsignals des Senders $S_2$. Dessen Modulator 11a zerlegt das $0\text{-Bit}_2$ in eine positive Impulsfolge $SP_2$ mit einer konstanten Pulsfolgefrequenz $T_2^{-1}$. Die Pulsfolgefrequenz $T_2^{-1}$ kann beispielsweise 10 µs betragen.

Die Figur 2 d ist ein solches Impulspaket $SP_2$, das zum Sendeelement 9 gelangt und in den Lichtwellenleiter 6 eingekoppelt wird. Die Signalübertragung erfolgt über den einen Lichtwellenleiter 6 in beide Richtungen und gleichzeitig ohne Synchronisation.

Die an beiden Enden des Lichtwellenleiters 6 eingekoppelten Impulsfolgen $SP_1$, $SP_2$ werden als Empfangs-Pulse $EP_2$, $EP_1$ jeweils am anderen Ende des Lichtwellenleiters 6 ausgekoppelt und in das Empfangselement 8, 10 eingekoppelt. Ferner sind durch Lichtstreuung des Sendeelementes 7, 9 Streulicht-Pulse $SSP_1$, $SSP_2$ in das Empfangselement 8, 10 eingekoppelt, die zusammen mit den Empfangs-Pulsen $EP_1$, $EP_2$ negative Summensignal-Pulse $SUP_1 = SSP_1 + EP_1$ sowie $SUP_2 = SSP_2 + EP_2$, gemäß Figur 2 f, 2 i bilden. Die Streusignal-Pulse $SSP_1$, $SSP_2$ laufen synchron und phasengleich mit den Sende-Pulsen $SP_1$, $SP_2$ und haben eine verzerrte Form, so daß die Impulslänge größer ist als die Impulslänge der Impulse von $SP_1$, $SP_2$. Dieses Summensignal $SUP_1$, $SUP_2$ steht am Eingang $E_5$, $E_6$ der Austastschaltung 13, 13a an.

Der Impulsformer 14, 14a wird getriggert von den Impulsfolgen $SP_1$, $SP_2$ und erzeugt zu den Sende-Pulsen phasengleiche und synchrone Austast-Pulse $AP_1$, $AP_2$ (Figur 2 e, 2 h) mit einer Impulslänge, die größer ist als die Impulslänge der Streulicht-Pulse $SSP_1$, $SSP_2$ gemäß Figur 2 f, 2 i. Diese Austast-Pulse $AP_1$, $AP_2$ stehen am Eingang $E_7$, $E_8$ der Austastschaltung 14, 14a an.

In der als Differenzstufe ausgebildeten Austastschaltung 13, 13a wird durch Subtraktion des Austast-Pulses $AP_1$, $AP_2$ und des Summensignal-Pulses $SUP_1$, $SUP_2$ der Streusignal-Puls $SSP_1$, $SSP_2$ eliminiert ($SUP_1 - SSP_1$). Am Ausgang $A_5$, $A_6$ der Austastschaltung 13, 13a stehen positive Empfangs-Pulse ($EP_1 = SUP_1 - SSP_1$; $EP_2 = SUP_2 - SSP_2$) an (Figur 2 g, 2 j), die im Demodulator 12, 12a in $0\text{-Bit}_1$, $0\text{-Bit}_2$ zurückgewandelt werden (Figur 2 a, 2 c) und über den Ausgang $A_3$, $A_4$ in den Empfänger $EM_1$, $EM_2$ gelangen.

Wie Figur 2 f, 2 i zeigt, tritt im Summensignal-Puls $SUP_1$ eine Kollision von einem Streusignal-Impuls und einem Empfangs-Impuls auf. Dadurch entsteht im Empfangs-Puls (Figur 2 g, 2 j) eine Lücke. Ein Datenverlust tritt dadurch nicht auf.

Die Folgefrequenzen der beiden Stationen sollten so gewählt sein, daß niemals zwei benachbarte Impulse der einen Folgefrequenz mit Impulsen der anderen Folgefrequenz zusammenfallen. Dadurch ist sichergestellt, daß auch im ungünstigsten Fall keine größeren Impulslücken bei den empfangenen Impulsfolgen auftreten können. Das Fortfallen eines einzelnen Impulses kann toleriert werden, wogegen zwei benachbarte Impulse niemals ausfallen dürfen. Der Demodulator der empfangenden Station stellt sich auf die Empfangs-Folgefrequenz ein und wertet zweckmäßigerweise nur solche Impulse aus, die in das Zeitraster der betreffenden Folgefrequenz hineinpassen.

Gemäß einer bevorzugten Ausführungsform der Erfindung sind die Folgefrequenzen der beiden Stationen so gewählt, daß bei jeder möglichen zeitlichen Zuordnung der Informationsbits beider Stationen die Impulsfolgen der Stationen innerhalb eines Informationsbits in maximal einem Impuls zusammenfallen. Auf diese Weise wird sichergestellt, daß von der Impulsfolge, die zu einem Informationsbit gehört, maximal ein Impuls unterdrückt wird. Die zu einem Informationsbit gehörende Impulsfolge hat eine fest Impulszahl. Von dieser Impulszahl darf beim Empfänger maximal ein Impuls fehlen.

**Patentansprüche**

1. Datenübertragungssystem mit mindestens zwei elektro-optischen Sende- und Empfangsstationen (1,2) zum Senden und Empfangen von Binärsignalen ($TxD_1,RxD;TxD_2,RxD_2$)im Duplex-Betrieb über einen Lichtwellenleiter (6), mit in jeder Station vorgesehenen Sendeelementen (7;9) und Empfangselementen (8;10),
   **dadurch gekennzeichnet,**
   daß die Informationsbits der Sendesignale jeweils aus einer Impulsfolge ($SP_1,SP_2$) einer vorgegebenen Folgefrequenz bestehen, wobei die Folgefrequenzen der Sendesignale der Stationen unterschiedlich sind, und daß jede Sende- und Empfangsstation (1,2) eine Austastschaltung (13) enthält, der die Signale des Empfangselements (8) zugeführt werden und die von den Sendeimpulsen dieser Station derart gesteuert ist, daß sie solche Impulse austastet, die im wesentlichen zeitgleich mit dem Aussenden von Impulsen empfangen werden.

2. Datenübertragungssystem nach Anspruch 1, dadurch gekennzeichnet, daß die Austastschaltung (13) von Austastimpulsen gesteuert ist, die länger sind als die Sendeimpulse.

3. Datenübertragungssystem nach Anspruch 1 oder 2, dadurch gekennzeichnet, daß die Austastschaltung (13) als Differenzstufe mit zwei Eingängen ($E_5,E_7$) ausgebildet ist.

4. Datenübertragungssystem nach Anspruch 3, dadurch gekennzeichnet, daß die Differenzstufe eine Inverterstufe enthält.

5. Datenübertragungssystem nach einem der Ansprüche 1-4, dadurch gekennzeichnet, daß der elektrische Ausgang des Empfangselements (8;10) an einen Eingang (E₅;E₆) der Austastschaltung (13;13a) angeschlossen ist und zwischen dem anderen Eingang (E₇,E₈) und dem Eingang des Sendeelements (7;9) eine Austastpulsformerstufe (14;14a) geschaltet ist.

6. Datenübertragungssystem nach einem der Ansprüche 1-5, dadurch gekennzeichnet, daß das Sendeelement (7;9) an einen Modulator (11;11a) angeschlossen ist, der aus den Informationsbits die Impulsfolge (SP₁;SP₂) mit der vorgegebenen Folgefrequenz erzeugt.

7. Datenübertragungssystem nach einem der Ansprüche 1-6, dadurch gekennzeichnet, daß das Empfangselement (8;10) an einen Demodulator (12;12a) angeschlossen ist, der aus der empfangenen Impulsfolge unter Berücksichtigung der Folgefrequenz der jeweils anderen Station die Informationsbits zurückgewinnt.

8. Datenübertragungssystem nach einem der Ansprüche 1-7, dadurch gekennzeichnet, daß die Folgefrequenzen der beiden Stationen so gewählt sind, daß niemals zwei benachbarte Impulse der einen Folgefrequenz mit Impulsen der anderen Folgefrequenz zusammenfallen.

9. Datenübertragungssystem nach einem der Ansprüche 1-8, dadurch gekennzeichnet, daß die Folgefrequenzen der beiden Stationen so gewählt sind, daß bei jeder möglichen zeitlichen Zuordnung der Informationsbits beider Stationen die Impulsfolgen der Stationen innerhalb eines Informationsbits in maximal einem Impuls zusammenfallen.

# FIG. 1

EP 0 865 174 A2

FIG.2